# EUROPEAN PATENT APPLICATION

(11) **EP 2 983 323 A1**
(43) Date of publication of application: **10.02.2016**
(21) Application number: 15179967.3
(22) Date of filing: 06.08.2015
(51) Int. Cl.: H04L 5/00

(54) **METHODS AND APPARATUS FOR INTERFERENCE MANAGEMENT**

(30) Priority: 07.08.2014 US 201462034418 P
(71) Applicant: Nokia Technologies Oy, 02610 Espoo (FI)
(72) Inventor: SCHOBER, Karol, 00440 Helsinki (FI); ENESCU, Mihai, 02120 Espoo (FI)
(74) Representative: Nokia Corporation

(57) **Abstract**

Systems and techniques for interference management. A set of CSI-RS subframe configurations is established, and a mapping is specified associating each CSI-RS subframe configuration with a corresponding CSI-RS subframe configuration subset indicator, such that the CSI-RS subframe configuration subset indicator identifies allowed CSI-RS subframe configurations at a first base station. The specified mapping is stored at the base station, and the configuration subset indicator is signaled to neighboring base stations. In response to receiving one or more CSI-RS indicators at a user device from a serving base station, a determination is made for each of plurality of subframes whether one or more CSI-RS subframe configurations represented by the one or more configuration indices indicates a CSI-RS presence in the subframe. In response to a determination that the one or more subframe configurations indicates a CSI-RS presence, at least partially clean resource element (RE) cancellation interference is applied in the subframe.

## Description

### CROSS-REFERENCE TO RELATED APPLICATIONS

This application claims priority from U.S. Provisional Application Serial No. 62/034,318, filed August 7, 2014, and incorporated herein by reference in its entirety.

### TECHNICAL FIELD:

The present invention relates generally to wireless communication. More particularly, the invention relates to improved systems and techniques for network assisted interference cancellation.

### DEFINITION OF ABBREVIATIONS:

The following definitions will assist in understanding various abbreviations used in this application:
- 3GPP: Third generation partnership project
- CSI-RS: Channel state information reference signal
- eNB: enhanced node B
- FDMA: Frequency division multiple access
- LTE-A: Long term evolution - advanced
- NAICS: Network assisted interference cancellation and suppression
- NZP: Non zero power
- OFDM: Orthogonal frequency division multiplexing
- RE: Resource Element
- TTI: Transmission time interval
- UE: User equipment
- ZP: Zero power

### BACKGROUND:

Modem wireless networking presents an environment in which numerous user devices and network infrastructure elements such as base stations must cooperate in the use of limited frequency resources. User devices are being designed to achieve interference cancellation. In 3GPP LTE and LTE-A systems, a channel state information reference signal (CSI-RS) subframe configuration of a serving cell is signaled to a user device (also called a user equipment or UE) to allow rate matching. The CSI-RS subframe configuration allows the UE to properly analyze the resource elements making up the transmission time interval, recognizing which resource elements in its allocated portion of the transmitted time interval do not belong to its physical downlink shared channel. CSI-RS signaling consists of zero power (ZP) and non-zero power (NZP) CSI-RS patterns, and the corresponding configuration of the pattern periodicity and time offset. Such CSI-RS signaling indicates to the UE the exact characteristics of a CSI-RS pattern. It will easily be recognized that control signaling, measurement signaling, reference signal signaling and the like, generally add to the signaling load without carrying user data. Any reduction of the control signaling load adds to system efficiency and decreases the burden on frequencies allocated to wireless communications.

### SUMMARY OF THE INVENTION

In one embodiment of the invention, a method comprises establishing a set of channel state information reference signal (CSI-RS) subframe configurations, specifying a mapping associating each CSI-RS subframe configuration with a corresponding CSI-RS configuration subset indicator, such that the CSI-RS configuration subset indicator identifies allowed CSI-RS subframe configurations at a first base station, storing the specified mapping at the first base station, and signaling the configuration subset indicator to at least one neighboring base station.

In another embodiment of the invention, a method comprises, in response to receiving, at a first base station serving a user device, a channel state information reference signal (CSI-RS) configuration subset indicator from a neighboring base station and examining stored mapping information to identify a CSI-RS subframe configuration associated with the CSI-RS subframe configuration subset indicator. The method further comprises, in response to a determination that the CSI-RS subframe is a potential cause of dominating interference to the user device, adding the CSI-RS subframe configuration to a set to be signaled to the user device and signaling the set to the user device.

In another embodiment of the invention, a method comprises, in response to receiving one or more channel state information reference signal (CSI-RS) configuration subset indicators at a user device from a serving base station, determining for each subframe of a plurality of subframes whether one or more CSI-RS subframe configurations represented by one or more CSI-RS configuration subset indicators indicates a CSI-RS presence in the subframe. The method further comprises, in response to a determination whether the one or more CSI-RS subframe configurations indicates a CSI-RS presence, applying at least partially clean resource element (RE) cancellation interference in the subframe.

In another embodiment of the invention, an apparatus comprises at least one processor and memory storing a program of instructions. The memory storing the program of instructions is configured to, with the at least one processor, cause the apparatus to at least establish a set of channel state information reference signal (CSI-RS) subframe configurations, specify a mapping associating each CSI-RS subframe configuration with a corresponding CSI-RS configuration subset indicator, such that the CSI-RS configuration subset indicator identifies allowed CSI-RS subframe configurations at a first base station, store the specified mapping at the first base station, and signal the configuration subset indicator to at least one neighboring base station.

In another embodiment of the invention, an apparatus comprises at least one processor and memory storing a program of instructions. The memory storing the program of instructions is configured to, with the at least one processor, cause the apparatus to at least, in response to receiving, at a first base station serving a user device, a channel state information reference signal (CSI-RS) configuration subset indicator from a neighboring base station and examining stored mapping information to identify a CSI-RS subframe configuration associated with the CSI-RS configuration subset indicator. The apparatus is further caused, in response to a determination that the CSI-RS subframe is a potential cause of dominating interference to the user device, to add the CSI-RS subframe configuration to a set to be signaled to the user device and signaling the set to the user device.

In another embodiment of the invention, an apparatus comprises at least one processor and memory storing a program of instructions. The memory storing the program of instructions is configured to, with the at least one processor, cause the apparatus to at least, in response to receiving one or more channel state information reference signal (CSI-RS) configuration subset indicators at a user device from a serving base station, determine for each subframe of a plurality of subframes whether one or more CSI-RS subframe configurations represented by one or more CSI-RS configuration subset indicatorsindicates a CSI-RS presence in the subframe and, in response to a determination that the one or more subframe CSI-RS configurations indicates a CSI-RS presence, apply at least partially clean resource element (RE) cancellation interference in the subframe.

In another embodiment of the invention, a computer readable memory stores a program of instructions, execution of which by at least one processor configures an apparatus to at least establish a set of channel state information reference signal (CSI-RS) subframe configurations, specify a mapping associating each CSI-RS subframe configuration with a corresponding CSI-RS configuration subset indicator, such that the CSI-RS configuration subset indicator identifies allowed CSI-RS subframe configurations at a first base station, store the specified mapping at the first base station, and signal the configuration subset indicator to at least one neighboring base station.

In another embodiment of the invention, a computer readable memory stores a program of instructions, execution of which by at least one processor configures an apparatus to at least, in response to receiving, at a first base station serving a user device, a channel state information reference signal (CSI-RS) configuration subset indicator from a neighboring base station, examine stored mapping information to identify a CSI-RS subframe configuration associated with the CSI-RS subframe configuration subset indicator. The apparatus is further caused, in response to a determination that the CSI-RS subframe is a potential cause of dominating interference to the user device, to add the CSI-RS subframe configuration to a set to be signaled to the user device and signaling the set to the user device.

In another embodiment of the invention, a computer readable memory stores a program of instructions, execution of which by at least one processor configures an apparatus to at least, in response to receiving one or more channel state information reference signal (CSI-RS) indicators at a user device from a serving base station, determine for each subframe of a plurality of subframes whether one or more CSI-RS subframe configurations represented by one or more CSI-RS configuration subset indicators indicates a CSI-RS presence in the subframe and, in response to a determination whether the one or more CSI-RS subframe configurations indicates a CSI-RS presence, apply at least partially clean resource element (RE) cancellation interference in the subframe.

### BRIEF DESCRIPTION OF THE DRAWINGS:

Fig. 1 illustrates a wireless network capable of using embodiments of the present invention;
Fig. 2 illustrates exemplary channel state information reference signal configurations for a serving base station and interfering base stations;
Fig. 3 illustrates possible configurations of channel state information reference signal;
Fig. 4 illustrates a configuration of network elements exchanging and using channel state information reference signal offset information according to an embodiment of the present invention; and
Fig. 5 illustrates elements that can be used to carry out embodiments of the present invention.

### DETAILED DESCRIPTION:

Embodiments of the present invention provide mechanisms for taking advantage of contemplated advances in wireless communication, particularly 3GPP LTE and LTE-A networks and devices using these networks. Contemplated advances in network assisted interference cancellation and suppression include mechanisms for network assistance to ease blind detection and improve interference cancellation efficiency. One contemplated parameter to be provided as network assistance includes information specifying the CSI-RS subframe configurations of a dominant interferer. As noted above, currently used CSI-RS signaling includes zero power and non-zero power CSI-RS subframe configuration, CSI-RS periodicity, and time offset. Such signaling indicates to a UE the exact characteristics of a CSI-RS pattern. However, not all of this CSI-RS information is necessarily needed for NAICS UE cancellation and suppression of an interfering node. One or more embodiments of the invention therefore provide mechanisms to reduce overhead signaling while still providing for the increased interference cancellation envisioned by providing for CSI-RS signaling.

In current systems, such as those specified by 3GPP LTE release 11, the CSI-RS subframe configuration is signaled to a UE in order to allow rate-matching. The NZP CSI-RS is used for CSI feedback computation and ZP CSI-RS is used for muting NZP resources, allowing for enhanced multi-point CSI feedback computation.

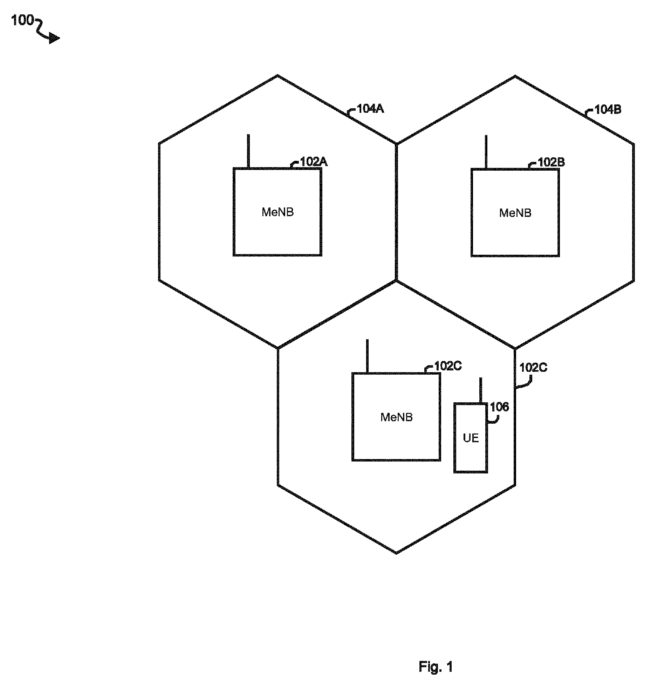

Fig. 1 illustrates a network 100 comprising base stations 102A-102C, defining cells 104A-104C, respectively. The base stations may be implemented as eNodeBs (eNBs). In the illustrated example, the eNB 102C is serving a user device, which may be an NAICS user equipment (UE) 106. The eNBs 102A and 102B are interfering eNBs.

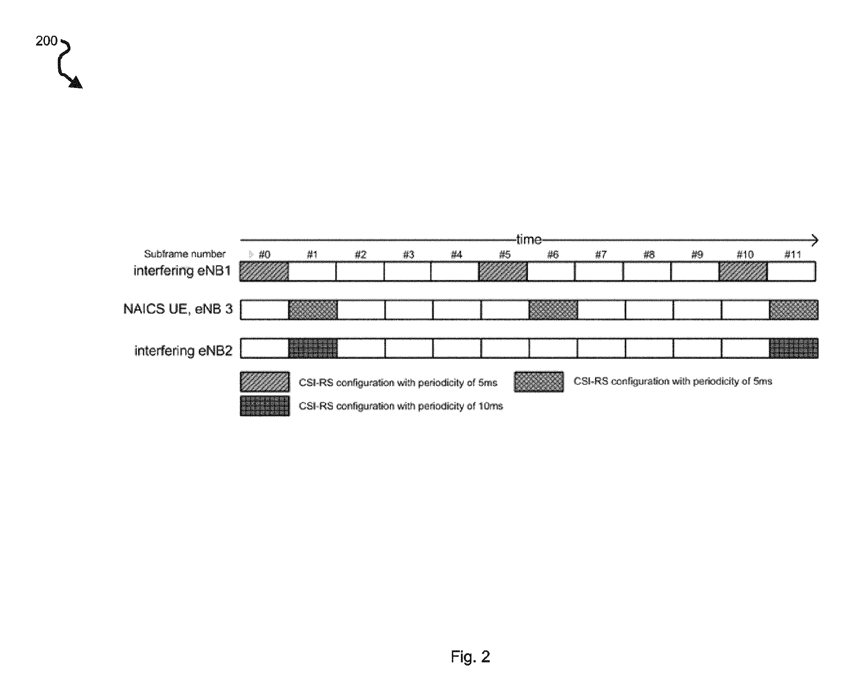

Fig. 2 presents a diagram 200 illustrating various CSI-RS subframe configurations for a serving NAICS eNB and interfering eNBs. In cases such as those contemplated by 3GPP LTE release 12, in which the cancellation of only one dominant interferer is supported, a minimum of two CSI-RS subframe configurations, one characterized by a NZP CSI-RS and (potentially) one by a ZP CSI-RS configuration of an interferer is to be taken into account. It will be recognized, however, that multiple CSI-RS subframe configurations can be taken into account in scenarios in which cancellation of multiple interferers is supported. The example presented in Fig. 2 shows two exemplary ways in which a NAICS UE (such as the UE 106 of Fig. 1) may achieve improved cancellation efficiency:
(1) If the interfering subframe carries no CSI-RS transmission, there is no ambiguity with respect to the interfering resource elements (REs). In the example illustrated in Fig. 2, this would correspond to a collision between interfering subframes of the interfering eNB 1, which may be, for example, eNB 102A of Fig. 1, and the eNB 3, which may be, for example, the eNB 102C of Fig. 1 - with the subframes 1, 2, 3, 4, 6, 7, 8, 9, and 11 of eNB 1 colliding with eNB 3 subframes having the same index numbers. From the perspective of the interfering eNB 2, which may be, for example, the eNB 102B of Fig. 1, there is no ambiguity for subframes 0, 2, 3, 4, 5, 6, 7, 8, 9, and 10.
(2) If an interfering eNB exhibits a CSI-RS subframe configuration, as does the eNB 1, corresponding to eNB 102A of Fig. 1, in subframes 0, 5, 10, the NACIS UE, which may be the UE 106 of Fig. 1, served by the eNB 3, corresponding to the eNB 102C of Fig. 1, would benefit from being informed of such configurations for the following reasons:
   (1) The UE can improve blind detection (BD) through awareness of the "clean" - that is, non-CSI-RS - REs, and can correctly identify the RE pairs.
   (2) The UE can apply interference cancellation (IC) on the clean REs, that is, the REs that do not carry CSI-RS symbols.

These benefits, however, do not necessarily yield a particularly great performance improvement. Embodiments of the present invention therefore provide mechanisms to differentiate between subframes that do not provide CSI-RS and subframes that do provide CSI-RS.

If the CSI-RS subframe configuration is not known, then if the interferer is in a closed loop transmission mode, the absence of rate matching is generally well tolerated by a UE because the density of the CSI-RS is relatively low. This condition is present in 3GPP LTE transmission modes TM4, TM6, TM8, TM9, and TM10.

However, when the interfering mode is 3GPP TM2, then in order to detect TM2 (Alamounti scheme) transmission, knowledge of RE (resource element) pairs is required. However, the unknown presence of CSI-RS may desynchronize the RE pairs and cause Alamounti detection to fail.

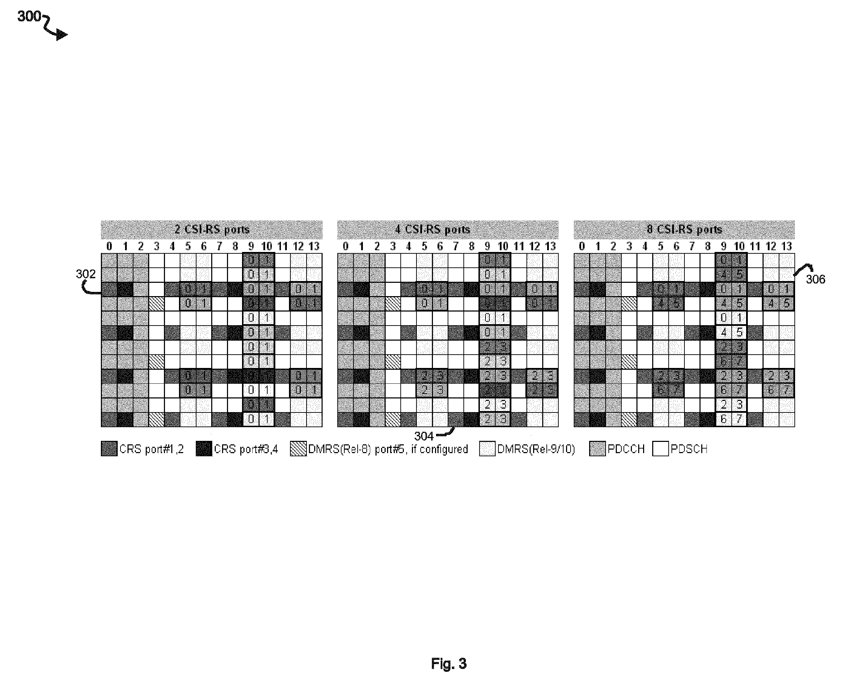

Fig. 3 presents a diagram 300 showing physical resource block (PRB) subframes 302, 304, and 306. The subframe 302 illustrates a CSI-RS subframe configuration using two CSI-RS ports; the subframe 304 illustrates a CSI-RS subframe configuration using four CSI-RS ports, and the subframe 306 illustrates a CSI-RS subframe configuration using eight CSI-RS ports. Each subframe illustrates all possible CSI-RS subframe configurations possible within the PRB subframe. Only the REs in OFDM symbols 3, 4, 7, 8, and 11 are safe from possible desynchronization. Therefore, an NAICS UE may perform blind detection (BD) and interference cancellation (IC) only within those OFDM symbols, while being inhibited from performing BD and IC within the other OFDM symbols. Every subframe may potentially carry CSI-RS, so a TM2 IC performing detection while blind to CSI-RS will operate with only approximately 50% of the efficiency that could be achieved if it were able to use conservative BD and IC in all subframes.

One approach using conventional mechanisms might be to inform each NAICS UE about candidate dominant interferer CSI-RS subframe configurations. Such an approach would prevent all possible RE-pair desynchronization and allow full IC of TM2 in any kind of subframe (with or without CSI-RS). However, informing each UE about the CSI-RS subframe configurations would require exchange of CSI-RS subframe configurations *(CSI-RS-Config)* between all transmission points in the network. An example set of instructions for carrying out such an exchange appears below:

### CSI-RS-Config information elements

```
 -- ASN1START
 CSI-RS-Config-r10 ::= SEQUENCE {
       csi-RS-r10 CHOICE {
       release NULL,
          setup SEQUENCE {
               antennaPortsCount-r10 ENUMERATED {an1, an2, an4,
 an8},
               resourceConfig-r10 INTEGER (0..31),
               subframeConfig-r10 INTEGER (0..154)*,
               p-C-r10 INTEGER (-8..15)
          }
     }
 OPTIONAL, -- Need ON
     zeroTxPowerCSI-RS-r10 CHOICE {
          release NULL,
          setup SEQUENCE {
               zeroTxPowerResourceConfigList-r10 BIT STRING (SIZE (16)),
               zeroTxPowerSubframeConfig-r10 INTEGER (0..154)
          }
     }
 OPTIONAL -- Need ON
 }
```

-- ASN1STOP

In addition, when the subframe configuration of CSI-RS changes at a transmission point, the configuration must again be re-signaled throughout the network.

In addition to the RRC configuration, the periodicity and subframe offset are jointly encoded, as shown in Table , taken from 3GPP technical specification 36.211. This joint coding is mapped on 155 CSI-RS subframe configurations which are RRC signaled by subframeConfig-r10. Such joint coding requires 8 bits, which from the NAICS perspective is not necessary, and which is avoided using mechanisms according to embodiments of the present invention. Table 1, taken from 3GPP technical specification 36.211 illustrates the subframe configuration of the CSI-RS.

**Table 1**

| **CSI-RS-SubframeConfig** *I*_{CSI-RS} | **CSI-RS periodicity** *T*_{CSI-RS} **(subframes)** | **CSI-RS subframe offset** Δ_{CSI-RS} **(subframes)** |
|---|---|---|
| 0 - 4 | 5 | *I*_{CSI-RS} |
| 5 - 14 | 10 | *I*_{CSI-RS} -5 |
| 15 - 34 | 20 | I_{CSI-RS} - 15 |
| 35 - 74 | 40 | *I*_{CSI-RS} -35 |
| 75 - 154 | 80 | *I*_{CSI-RS} -75 |

In Table 1, 155 CSI-RS subframe configurations, *I_{CSI-RS},* are listed in the left column, which are divided into five groups corresponding to the CSI-RS periodicity *T_{CSI-RS}*, for example periodicity of 5, 10, 20, 40 and 80 from the middle column. In the right column, each CSI-RS subframe configuration's corresponding CSI-RS subframe offset *Δ_{CSI-RS},* such as *I_{CSI-RS}, I_{CSI-RS}*-5*, I_{CSI-RS}*-15*, I_{CSI-RS}*-35 or *I_{CSI-RS}*-75*,* is listed.

One or more embodiments of the invention achieve significant efficiency gains and greatly reduced signaling overhead, by sending only a CSI-RS subframe configuration subset indicator, or set of indicators, to an NAICS UE. Each CSI-RS subframe configuration subset indicator may take the form *nₜₐᵤ* ∈ {0,1,2,3,4}, where such an indicator is common to all CSI-RS periodicities. Table 2 below illustrates a mapping of *nₜₐᵤ* to *I*_{CSI-RS} that can be used at an interfering eNB. The mapping due to *nₜₐᵤ* does not change the CSI-RS subframe configuration of the interfering eNB with respect to its served UE, but instead is used as an inter-eNB signal in order to reduce the signaling payload and preserve eNB configuration. As described in greater detail below, the eNB (or transmission point) signals only 3 bits across the network, rather than 8 bits for each configured CSI-RS, and an eNB is allowed to configure 31 arbitrary configurations within subset restrictions, with no need for re-signaling if the subframe configuration of CSI-RS changes.

Table 2 presents a mapping of the CSI-RS subframe configuration subset indicator *nₜₐᵤ* to a subset of allowed CSI-RS subframe configurations (first column of Table 1) at an interfering eNB. The interfering eNB decides for at least one index *nₜₐᵤ* and configure one or more CSI-RS subframe configurations within the corresponding I_{CSI-RS} subset in Table 2. The interfering eNB signals *nₜₐᵤ* within the network

**Table 2**

| *n*ₜₐᵤ | CSI-RS-SubframeConfig *I*_{CSI-RS} |
|---|---|
| 0 | [0,5,10,15,...150] |
| 1 | [0,5,10,15,...150]+1 |
| 2 | [0,5,10,15,...150]+2 |
| 3 | [0,5,10,15,...150]+3 |
| 4 | [0,5,10,15,...150]+4 |

After the serving eNB receives the value of *n*ₜₐᵤ from interfering eNBs, it signals *n*ₜₐᵤ to the UE as part of network assistance. Alternatively, *n*ₜₐᵤ is signaled to the UE in the form of *I*_{CSI-RS} configuration according to Table , or any *I*_{CSI-RS} from a corresponding subset in Table 2.

**Table 3**

| *nₜₐᵤ* | CSI-RS-SubframeConfig *I*_{CSI-RS} |
|---|---|
| 0 | 0 |
| 1 | 1 |
| 2 | 2 |
| 3 | 3 |
| 4 | 4 |

Thus, rather than signaling a subframe configuration between an interfering eNB and a serving eNB, and then between the serving eNB and a UE, signaling is carried out using indicators pointing to mappings stored at the serving eNB and at the UE. Note that signaling any *I*_{CSI-RS} to the UE may indicate the subset corresponding to *n*ₜₐᵤ as defined in Table 2.

In one embodiment of the invention, each eNB imposes an I_{CSI-RS} subset restriction on its CSI-RS subframe configurations, so that each allowable CSI-RS subframe configuration is a member of one subset or the other. Each eNB is configured so that a CSI-RS subframe configuration subset indicator *nₜₐᵤ* to the CSI-RS subframe configurations. The I_{CSI-RS} subset restriction limits the number of allowable CSI-RS subframe configurations, so that it is easier to map CSI-RS subframe configurations to a manageable number of indicators.

In one embodiment of the invention, each interfering eNB signals the CSI-RS subframe configuration subset indicator *nₜₐᵤ* to its neighbor eNB over, for example, an X2 interface. Each serving eNB will naturally be configured so as to be aware of similar subset restrictions and will store similar mapping, because eNBs are not configured as "serving" eNBs or "interfering" eNBs; they are serving eNBs with respect to their own UEs and may be interfering UEs with respect to UEs served by neighboring eNBs.

A serving eNB receives *nₜₐᵤ*S from its neighbor eNBs, and examines its stored mapping to identify each CSI-RS subframe configuration corresponding to a received *nₜₐᵤ*, and to determine for each *nₜₐᵤ* whether its associated CSI-RS subframe configuration potentially causes dominating interference for a UE. The *nₜₐᵤ* for each such configuration is added to a set to be signaled to the UE. Once the set has been assembled, the serving eNB signals the set of *nₜₐᵤ*S to the UE using higher layer signaling, such as radio resource control (RRC). As noted above, the UE has a stored mapping of I_{CSI-RS} to *nₜₐᵤ,* and is able to use each *nₜₐᵤ* value to look up its corresponding CSI-RS subframe configuration. The UE applies full interference cancellation on subframes in which CSI-RS is not present and applies at least partially clean resource-element interference cancellation on subframes in which CSI-RS is present.

The NAICS UE does not need to know the exact configuration of interfering CSI-RS ports. It needs only to be able to recognize OFDM subframes in which full interference cancellation can be safely performed - that is, in a potential CSI-RS region. In all subframes that are not safe, the UE performs at least partially clean-RE interference cancellation outside of this CSI-RS region. Embodiments of the present invention address mechanisms that preserve the majority of the efficiency gains made available by NAICS capability, while providing for relatively simple signaling. In addition, embodiments of the present invention allow for a cell to change its CSI-RS subframe configuration without a need to signal the configuration to the other network nodes.

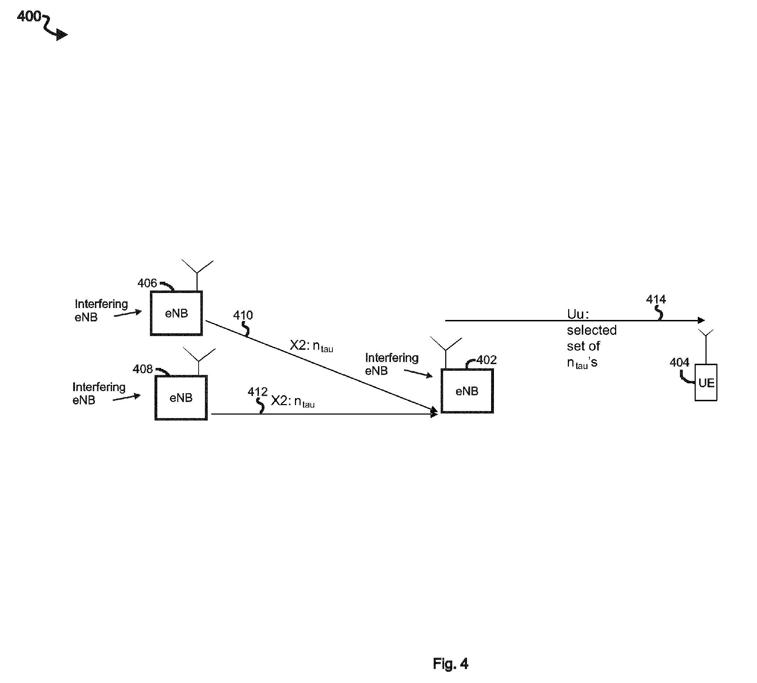

Fig. 4 illustrates a CSI-RS subframe configuration 400 of a serving eNB 402 and a UE 404 served by the eNB 402, and interfering eNBs 406 and 408, showing signaling paths to provide offset values *nₜₐᵤ* from the interfering eNBs 406 and 408 to the serving eNB 402, and a set of *nₜₐᵤ*S from the serving eNB 402 to the UE 404.

In the present example, each interfering eNB selects I_{CSI-RS} and *nₜₐᵤ,* where *nₜₐᵤ* = mod(I_{CSI-RS}, 5) and signals *nₜₐᵤ* to the serving eNB.

In one approach, the interfering eNB configures CSI-RS according to I_{CSI-RS}. The interfering eNB then continually updates I_{CSI-RS}, sets *nₜₐᵤ* equal to mod(I_{CSI-RS}, 5) if it is not equal to mod(I_{CSI-RS}, 5), and signals *nₜₐᵤ,* and then configures CSI-RS according to I_{CSI-RS}.

The serving eNB receives one or more *nₜₐᵤ*S*,* and creates a set by selecting one or more values of *nₜₐᵤ* from those received. The serving eNB signals the selected set to the UE.

In one approach, the serving eNB continually receives one or more *nₜₐᵤ*S, updates a set of one or more values of *nₜₐᵤ* with the received values, and, if the updated set is not equal to the last signaled set, then signals the selected set.

The UE receives one or more *nₜₐᵤ*S and, for a plurality of subframes, uses the one or more *nₜₐᵤ*S to determine, for each of a plurality of subframes, determines whether at least one CSI-RS subframe configuration belonging to a set whose members are each represented by at least one *nₜₐᵤ* indicates a CSI-RS presence in the subframe. If no CSI-RS is indicated to be present, the UE applies full interference cancellation to the subframe. If CSI-RS is indicated to be present, the UE applies at least partially clean RE interference cancellation in the subframe.

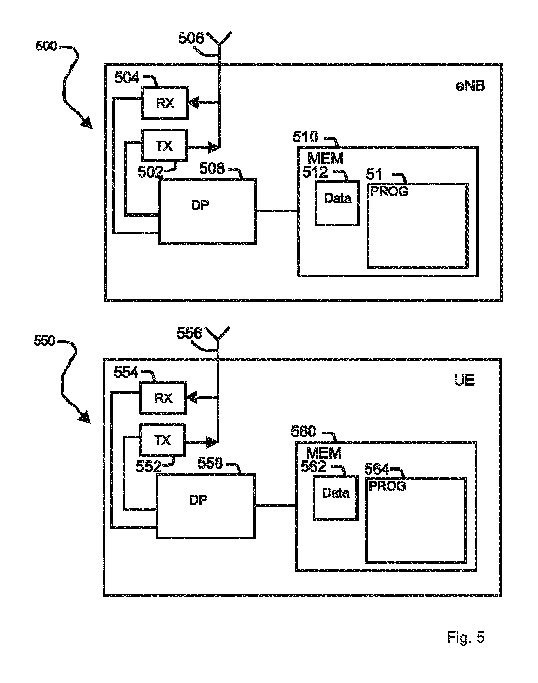

Fig. 5 illustrates details of an eNB (eNB) 500, and a user equipment (UE) 550. The eNB 500 may suitably comprise a transmitter 502, receiver 504, and antenna 506. The eNB 500 may also include a processor 508 and memory 510. The eNB 500 may employ data 512 and programs (PROGS) 514, residing in memory 510.

The UE 550 may suitably comprise a transmitter 552, receiver 554, and antenna 556. The UE 550 may also include a processor 558 and memory 560. The UE 550 may employ data 562 and programs (PROGS) 564, residing in memory 560.

At least one of the PROGs 514 in the eNB 500 is assumed to include a set of program instructions that, when executed by the associated DP 508, enable the device to operate in accordance with the exemplary embodiments of this invention, as detailed above. In these regards the exemplary embodiments of this invention may be implemented at least in part by computer software stored on the MEM 510, which is executable by the DP 508 of the eNB 500, or by hardware, or by a combination of tangibly stored software and hardware (and tangibly stored firmware). Similarly, at least one of the PROGs 564 in the UE 550 is assumed to include a set of program instructions that, when executed by the associated DP 558, enable the device to operate in accordance with the exemplary embodiments of this invention, as detailed above. In these regards the exemplary embodiments of this invention may be implemented at least in part by computer software stored on the MEM 560, which is executable by the DP 558 of the UE 550, or by hardware, or by a combination of tangibly stored software and hardware (and tangibly stored firmware). Electronic devices implementing these aspects of the invention need not be the entire devices as depicted at Figure 4 or Fig. 5 or may be one or more components of same such as the above described tangibly stored software, hardware, firmware and DP, or a system on a chip SOC or an application specific integrated circuit ASIC.

In general, the various embodiments of the UE 550 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable MEM 510 and 560 include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DP 508 and 558 include but are not limited to general purpose computers, special purpose computers, microprocessors, digital signal processors (DSPs) and multi-core processors.

In one embodiment of the invention, a method comprises establishing a set of CSI-RS subframe configurations and specifying a mapping between each CSI-RS subframe configuration and a corresponding CSI-RS subframe configuration subset indicator, and storing the specified mapping information in each of a plurality of base stations and user devices. The method further comprises signaling of the configuration subset indicator by a base station to neighboring base stations.

In another embodiment of the invention, the indicator mapped to each CSI-RS subframe configuration is common to all periodicities of the configuration.

In another embodiment of the invention, the indicator is signaled using X2 signaling.

In another embodiment of the invention, the set of CSI-RS subframe configurations is constrained to a subset of allowed CSI-RS subframe configurations.

In another embodiment of the invention, a method comprises, upon receiving a CSI-RS subframe configuration subset indicator from a neighboring base stations, retrieving the associated CSI-RS subframe configuration, determining if the CSI-RS subframe configuration may potentially cause dominating interference to a user device served by the base station and, if so, adding the CSI-RS subframe configuration subset indicator to a set to be signaled to the user device.

In another embodiment of the invention, the method comprises signaling of the set to the user device over higher-layer signaling.

In another embodiment of the invention, signaling of the set to the user device is carried out using radio resource control signaling.

In another embodiment of the invention, the method comprises receiving one or more CSI-RS subframe configuration subset indicators at a user device from a serving base station and, for each of a plurality of subframes, determining whether one or more CSI-RS subframe configurations represented by the one or more configuration indices indicates a CSI-RS presence in the subframe. Each CSI-RS subframe configuration has a corresponding CSI-RS subframe configuration subset indicator.

In another embodiment of the invention, the method comprises, if the one or more CSI-RS subframe configurations indicates a CSI-RS presence, applying at least partially clean RE interference cancellation in the subframe.

In another embodiment of the invention, the method comprises, if none of the one or more CSI-RS subframe configurations indicates a CSI-RS presence, applying full interference cancellation in the subframe.

In another embodiment of the invention, an apparatus comprises at least one processor and memory storing a program of instructions. The memory storing the program of instructions is configured to, with the at least one processor, cause the apparatus to at least, upon receiving a CSI-RS subframe configuration subset indicator from a neighboring base station, retrieve the associated CSI-RS subframe configuration, determine if the CSI-RS configuration may potentially cause dominating interference to a user device served by the base station and, if so, add the subframe configuration subset indicator to a set to be signaled to the user device.

In another embodiment of the invention, the set is signaled to the user device over higher-layer signaling.

In another embodiment of the invention, signaling of the set to the user device is carried out using radio resource control signaling.

In another embodiment of the invention, the apparatus is caused to receive one or more CSI-RS subframe configuration subset indicators at a user device from a serving base station and, for each of a plurality of subframes, determine whether one or more CSI-RS subframe configurations represented by the one or more configuration subset indicators indicates a CSI-RS presence in the subframe.

In another embodiment of the invention, if the one or more CSI-RS subframe configurations indicates a CSI-RS presence, at least partially clean RE interference cancellation is applied in the subframe.

In another embodiment of the invention, if none of the one or more CSI-RS subframe configurations indicates a CSI-RS presence, full interference cancellation is applied in the subframe.

In one embodiment of the invention, an apparatus comprises at least one processor and memory storing a program of instructions. The memory storing the program of instructions is configured to, with the at least one processor, cause the apparatus to at least establish a set of CSI-RS subframe configurations and specify a mapping between each CSI-RS subframe configuration and a corresponding CSI-RS subframe configuration subset indicator, and store the specified mapping information in each of a plurality of base stations and user devices. The apparatus is further caused to control a base station to signal the CSI-RS subframe configuration subset indicator by a base station to neighboring base stations.

In another embodiment of the invention, the configuration subset indicator mapped to each CSI-RS subframe configuration is common to all CSI-RS subframe periodicities of the configuration.

In another embodiment of the invention, the CSI-RS subframe configuration subset indicator is signaled using X2 signaling.

In another embodiment of the invention, the set of CSI-RS subframe configurations is constrained to a subset of allowed I_{CSI-RS} configurations.

In another embodiment of the invention, an apparatus comprises at least one processor and memory storing a program of instructions. The memory storing the program of instructions is configured to, with the at least one processor, cause the apparatus to at least, upon receiving a CSI-RS subframe configuration subset indicator from a neighboring base station, retrieve the associated CSI-RS subframe configuration, determine if the CSI-RS subframe configuration may potentially cause dominating interference to a user device served by the base station and, if so, adding the CSI-RS subframe configuration subset indicator to a set to be signaled to the user device.

In another embodiment of the invention, the set is signaled to the user device over higher-layer signaling.

In another embodiment of the invention, the set is signaled to the user device using radio resource control signaling.

In another embodiment of the invention, the apparatus is a user device and is caused to receive one or more CSI-RS subframe configuration subset indicators from a serving base station and, for each of a plurality of CSI-RS subframes, determine whether one or more CSI-RS subframe configurations represented by the one or more configuration indices indicates a CSI-RS presence in the subframe.

In another embodiment of the invention, if the one or more CSI-RS subframe configurations indicates a CSI-RS presence, the user device applies at least partially clean RE interference cancellation in the subframe.

In another embodiment of the invention, if none of the one or more CSI-RS configurations indicates a CSI-RS presence, the user device applies full interference cancellation in the subframe.

In another embodiment of the invention, a computer readable medium stores a program of instructions. Execution of the program of instructions by a processor configures the apparatus to at least, upon receiving a CSI-RS subframe configuration subset indicator from a neighboring base station, retrieve the associated CSI-RS subframe configuration, determine if the CSI-RS subframe configuration may potentially cause dominating interference to a user device served by the base station and, if so, add the CSI-RS subframe configuration subset indicator to a set to be signaled to the user device.

In another embodiment of the invention, the set is signaled to the user device over higher-layer signaling.

In another embodiment of the invention, signaling of the set to the user device is carried out using radio resource control signaling.

In another embodiment of the invention, the apparatus is configured to receive one or more CSI-RS subframe configuration subset indicators at a user device from a serving base station and, for each of a plurality of subframes, determine whether one or more CSI-RS subframe configurations represented by the one or more CSI-RS subframe configuration subset indicators indicates a CSI-RS presence in the subframe.

In another embodiment of the invention, if the one or more CSI-RS configurations indicates a CSI-RS presence, at least partially clean RE interference cancellation is applied in the subframe.

In another embodiment of the invention, if none of the one or more CSI-RS subframe configurations indicates a CSI-RS presence, full interference cancellation is applied in the subframe.

In another embodiment of the invention, a computer readable medium stores a program of instructions. Execution of the program of instructions by a processor configures an apparatus to at least establish a set of CSI-RS subframe configurations and specify a mapping between each CSI-RS subframe configuration and a corresponding CSI-RS subframe configuration subset indicator, and store the specified mapping information in each of a plurality of base stations and use devices. The apparatus is further configured to control a base station to signal the CSI-RS subframe configuration subset indicator by a base station to neighboring base stations.

In another embodiment of the invention, the configuration subset indicator mapped to each CSI-RS subframe configuration is common to all periodicities of the CSI-RS subframe configuration.

In another embodiment of the invention, the CSI-RS subframe configuration subset indicator is signaled using X2 signaling.

In another embodiment of the invention, the set of CSI-RS subframe configurations is constrained to a subset of allowed CSI-RS subframe configurations.

In another embodiment of the invention, a computer readable medium stores a program of instructions. Execution of the program of instructions by a processor configures an apparatus to at least, upon receiving a configuration subset indicator from a neighboring base station, retrieve the associated CSI-RS subframe configuration, determine if the CSI-RS subframe configuration may potentially cause dominating interference to a user device served by the base station and, if so, adding the CSI-RS subframe configuration subset indicator to a set to be signaled to the user device.

In another embodiment of the invention, the set is signaled to the user device over higher-layer signaling.

In another embodiment of the invention, the set is signaled to the user device using radio resource control signaling.

In another embodiment of the invention, the apparatus is a user device and is configured to receive one or more CSI-RS subframe configuration subset indicators from a serving base station and, for each of a plurality of subframes, determine whether one or more CSI-RS subframe configurations represented by the one or more configuration indices indicates a CSI-RS presence in the subframe.

In another embodiment of the invention, if the one or more CSI-RS subframe configurations indicates a CSI-RS presence, the user device applies at least partially clean RE interference cancellation in the subframe.

In another embodiment of the invention, if none of the one or more CSI-RS subframe configurations indicates a CSI-RS presence, the user device applies full interference cancellation in the subframe.

In another embodiment of the invention, an apparatus comprises means for establishing a set of CSI-RS subframe configurations, means for specifying a mapping between each CSI-RS configuration and a corresponding CSI-RS subframe configuration subset indicator, and means for storing the specified mapping information in each of a plurality of base stations and use devices. The apparatus further comprises means for causing signaling of the CSI-RS subframe configuration subset indicator by a base station to neighboring base stations.

In another embodiment of the invention, the subset indicator mapped to each CSI-RS subframe configuration is common to all periodicities of the configuration.

In another embodiment of the invention, the CSI-RS subframe configuration subset indicator is signaled using X2 signaling.

In another embodiment of the invention, the set of CSI-RS subframe configurations is constrained to a subset of allowed CSI-RS subframe configurations.

In another embodiment of the invention, an apparatus comprises means for, upon receiving a CSI-RS subframe configuration subset indicator from a neighboring base stations, retrieving the associated CSI-RS subframe configuration, determining if the CSI-RS subframe configuration may potentially cause dominating interference to a user device served by the base station and, if so, adding the CSI-RS subframe configuration subset indicator to a set to be signaled to the user device.

In another embodiment of the invention, the apparatus further comprises means for signaling of the set to the user device over higher-layer signaling.

In another embodiment of the invention, the apparatus further comprises means for signaling of the set to the user device using radio resource control signaling.

In another embodiment of the invention, the apparatus comprises means for receiving one or more CSI-RS subframe configuration subset indicators at a user device from a serving base station and, for each of a plurality of subframes, determining whether one or more CSI-RS subframe configurations represented by the one or more configuration indices indicates a CSI-RS presence in the subframe.

In another embodiment of the invention, the apparatus comprise means for, if the one or more CSI-RS subframe configurations indicates a CSI-RS presence, applying at least partially clean RE interference cancellation in the subframe.

In another embodiment of the invention, the apparatus comprises means for, if none of the one or more CSI-RS subframe configurations indicates a CSI-RS presence, applying full interference cancellation in the subframe.

While various exemplary embodiments have been described above it should be appreciated that the practice of the invention is not limited to the exemplary embodiments shown and discussed here. Various modifications and adaptations to the foregoing exemplary embodiments of this invention may become apparent to those skilled in the relevant arts in view of the foregoing description.

Further, some of the various features of the above non-limiting embodiments may be used to advantage without the corresponding use of other described features.

The foregoing description should therefore be considered as merely illustrative of the principles, teachings and exemplary embodiments of this invention, and not in limitation thereof.

## Claims

1. A method comprising:
establishing a set of channel state information reference signal (CSI-RS) subframe configurations;
specifying a mapping between each CSI-RS subframe configuration and a corresponding CSI-RS subframe configuration subset indicator;
storing the specified mapping in each of a plurality of base stations; and
signaling the configuration subset indicator to neighboring base stations.

2. The method of claim 1, wherein the indicator mapped to each CSI-RS subframe configuration is common to all periodicities of the configuration.

3. The method of claim 1 or claim 2, wherein the indicator is signaled using X2 signaling.

4. The method of any one of claims 1 through 3, wherein the set of established CSI-RS subframe configurations is constrained to a set of allowed CSI-RS subframe configurations.

5. A method comprising:
in response to receiving, at a first base station serving a user device, a channel state information reference signal (CSI-RS) subframe configuration subset indicator from a neighboring base station, retrieving CSI-RS subframe configuration associated with the CSI-RS subframe configuration subset indicator;
in response to a determination that the CSI-RS subframe is a potential cause of dominating interference to the user device, adding the CSI-RS subframe configuration to a set to be signaled to the user device; and
signaling the set to the user device.

6. The method of claim 5, wherein signaling the set to the user device is over higher-layer signaling.

7. The method of claim 5, wherein signaling the set to the user device is carried out using radio resource control (RRC) signaling.

8. A method comprising;
in response to receiving one or more channel state information reference signal (CSI-RS) subframe configuration subset indicators at a user device from a serving base station, determining for each of a plurality of subframes whether one or more CSI-RS subframe configurations represented by the one or more CSI-RS subframe configuration subset indicators indicates a CSI-RS presence in the subframe; and
in response to a determination that the one or more CSI-RS subframe configurations indicates a CSI-RS presence, applying at least partially clean resource element (RE) cancellation interference in the subframe.

9. The method of claim 8, further comprising identifying a CSI-RS configuration subset indicator representing a CSI-RS subframe of a dominating interference to the user device.

10. The method of claim 8 or claim 9, further comprising applying partially clean resource element (RE) cancellation interference in the subframe in response to recognition that full interference cancellation cannot be safely performed in the subframe.

11. The method of claim 8 or claim 9, further comprising recognizing each of the subframes in which full interference cancellation can be safely performed.

12. The method of any one of claims 8, 9 and 11 further comprising, if none of the one or more CSI-RS subframe configurations indicates a CSI-RS presence, applying full interference cancellation in the subframe.

13. The method of any one of claims 8 through 12, further comprising receiving one or more CSI-RS subframe configuration subset indicators from a radio resource control (RRC) channel.

14. An apparatus comprising means to perform a method according to any one of claims 1 to 4, or according to any one of claims 5 to 6, or according to any one of claims 7 to 12.

15. A non-transitory computer readable medium encoded with instructions that, when executed in hardware, perform a process, the process comprising:
establishing a set of channel state information reference signal (CSI-RS) subframe configurations;
specifying a mapping between each CSI-RS subframe configuration and a corresponding CSI-RS subframe configuration subset indicator;
storing the specified mapping in each of a plurality of base stations; and
signaling the configuration subset indicator to neighboring base stations.
